# EUROPEAN PATENT APPLICATION

(11) **EP 4 622 321 A1**
(43) Date of publication of application: **24.09.2025**
(21) Application number: 23909597.9
(22) Date of filing: 31.10.2023
(51) Int. Cl.: H04W 24/02

(54) **COMMUNICATION METHOD AND APPARATUS**

(30) Priority: 30.12.2022 CN 202211739893
(71) Applicant: Huawei Technologies Co., Ltd., Shenzhen, Guangdong 518129 (CN)
(72) Inventor: DENG, Ruinan, Shenzhen, Guangdong 518129 (CN); RUAN, Wei, Shenzhen, Guangdong 518129 (CN)
(74) Representative: Gill Jennings & Every LLP
(86) International application number: PCT/CN2023/128336
(87) International publication number: WO 2024/139664

(57) **Abstract**

This application relates to the field of communication technologies, and discloses a communication method and apparatus. The method includes: A first multi-link device sends a first frame on a first link, where the first frame includes a first field, and the first field is used to carry a first-type non-legacy long training sequence. The first multi-link device sends a second frame on a second link, where the second frame includes a second field, and the second field is used to carry a second-type non-legacy long training sequence. A start time of the first field is aligned with a start time of the second field, and an end time of the first field is aligned with an end time of the second field, that is, a boundary of the first field is aligned with a boundary of the second field. In this way, the boundary of the first field is set to be aligned with the boundary of the second field, so that the first frame and the second frame are aligned in a time unit (or symbol), thereby reducing interference between the first link and the second link.

## Description

### CROSS-REFERENCE TO RELATED APPLICATIONS

This application claims priority to Chinese Patent Application No. 202211739893.2, filed with the China National Intellectual Property Administration on December 30, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

To achieve a technical goal of an extremely high throughput, multi-link (multi-link, ML) communication is used as one of key technologies in the Institute of Electrical and Electronics Engineers (institute of electrical and electronics engineers, IEEE) 802.11be.

A core idea of multi-link communication is that a communication device has multi-band (multi-band) transmitting and receiving capabilities, and therefore uses a larger bandwidth for data transmission, to significantly increase a throughput. One frequency band in which the communication device performs access and transmission may be referred to as one link. A plurality of frequency bands in which the communication device performs access and transmission may be referred to as a multi-link. In addition, a device supporting a plurality of links may be referred to as a multi-link device (multi-link device, MLD).

Two links are used as examples. When the multi-link device transmits signals on the two links, energy leaked from a signal on one link to the other link causes interference to a signal on the other link. Therefore, how to reduce mutual interference between the plurality of links still needs to be further studied.

### SUMMARY

This application provides a communication method and apparatus, to reduce interference between a plurality of links and improve communication efficiency.

According to a first aspect, an embodiment of this application provides a communication method. The communication method may be applied to a first multi-link device or a component (for example, a circuit or a chip) in the first multi-link device. For example, the method is applied to the first multi-link device. In the method, the first multi-link device sends a first frame on a first link, where the first frame includes a first field, and the first field is used to carry a first-type non-legacy long training sequence. The first multi-link device sends a second frame on a second link, where the second frame includes a second field, and the second field is used to carry a second-type non-legacy long training sequence. A start time of the first field is aligned with a start time of the second field, and an end time of the first field is aligned with an end time of the second field.

According to the foregoing method, a boundary of the first field is restricted to be aligned with a boundary of the second field, so that the first frame and the second frame are aligned in a time unit (or symbol), thereby reducing interference between the first link and the second link.

In a possible design, the first field includes M first subfields, the second field includes M second subfields, where M is determined based on a larger value of numbers of spatial streams of the first link and the second link.

In a possible design, the first frame further includes a third field, and the third field is used to carry first-type user information. The second frame further includes a fourth field, and the fourth field is used to carry second-type user information. A start time of the third field is aligned with a start time of the fourth field, and an end time of the third field is aligned with an end time of the fourth field.

In a possible design, the first frame further includes a third field, and the third field is used to carry first-type user information and a padding bit. The second frame further includes a fourth field, and the fourth field is used to carry second-type user information. A start time of the third field is aligned with a start time of the fourth field, and an end time of the third field is aligned with an end time of the fourth field.

In a possible design, a start time of the first frame is aligned with a start time of the second frame; and/or an end time of the first frame is aligned with an end time of the second frame.

In a possible design, the method further includes: performing rollback on the first link based on a first backoff parameter; and performing rollback on the second link based on a second backoff parameter, where the second backoff parameter is greater than the first backoff parameter. The rollback on the first link succeeds, and a channel is listened to be idle on the second link.

In a possible design, the method further includes: receiving a first trigger frame from a second multi-link device on the first link, where the first trigger frame is used to trigger the first multi-link device to send the first frame and the second frame.

In a possible design, the method further includes: receiving a first trigger frame from a second multi-link device on the first link, where the first trigger frame is used to trigger the first multi-link device to send the first frame; and receiving a second trigger frame from the second multi-link device on the second link, where the second trigger frame is used to trigger the first multi-link device to send the second frame. A start time of the first trigger frame is aligned with a start time of the second trigger frame, and an end time of the first trigger frame is aligned with an end time of the second trigger frame.

In a possible design, a frequency domain resource corresponding to the first link and a frequency domain resource corresponding to the second link are consecutive in frequency domain, or a frequency domain resource corresponding to the first link and a frequency domain resource corresponding to the second link are inconsecutive in frequency domain.

According to a second aspect, an embodiment of this application provides a communication method. The communication method may be applied to a second multi-link device or a component (for example, a circuit or a chip) in the second multi-link device. For example, the method is applied to the second multi-link device. In the method, the second multi-link device receives a first frame on a first link, where the first frame includes a first field, and the first field is used to carry a first-type non-legacy long training sequence. The second multi-link device receives a second frame on a second link, where the second frame includes a second field, and the second field is used to carry a second-type non-legacy long training sequence. A start time of the first field is aligned with a start time of the second field, and an end time of the first field is aligned with an end time of the second field.

In a possible design, the first field includes M first subfields, the second field includes M second subfields, where M is determined based on a larger value of numbers of spatial streams of the first link and the second link.

In a possible design, the first frame further includes a third field, and the third field is used to carry first-type user information. The second frame further includes a fourth field, and the fourth field is used to carry second-type user information. A start time of the third field is aligned with a start time of the fourth field, and an end time of the third field is aligned with an end time of the fourth field.

In a possible design, the first frame further includes a third field, and the third field is used to carry first-type user information and a padding bit. The second frame further includes a fourth field, and the fourth field is used to carry second-type user information. A start time of the third field is aligned with a start time of the fourth field, and an end time of the third field is aligned with an end time of the fourth field.

In a possible design, a start time of the first frame is aligned with a start time of the second frame; and/or an end time of the first frame is aligned with an end time of the second frame.

In a possible design, the method further includes: sending a first trigger frame to a first multi-link device on the first link, where the first trigger frame is used to trigger the first multi-link device to send the first frame and the second frame.

In a possible design, the method further includes: sending a first trigger frame to a first multi-link device on the first link, where the first trigger frame is used to trigger the first multi-link device to send the first frame; and
sending a second trigger frame to the first multi-link device on the second link, where the second trigger frame is used to trigger the first multi-link device to send the second frame. A start time of the first trigger frame is aligned with a start time of the second trigger frame, and an end time of the first trigger frame is aligned with an end time of the second trigger frame.

In a possible design, a frequency domain resource corresponding to the first link and a frequency domain resource corresponding to the second link are consecutive in frequency domain, or a frequency domain resource corresponding to the first link and a frequency domain resource corresponding to the second link are inconsecutive in frequency domain.

According to a third aspect, this application provides a communication apparatus. The communication apparatus has a function of implementing the first aspect or the second aspect. For example, the communication apparatus includes a corresponding module, unit, or means (means) for performing an operation in the first aspect or the second aspect. The module, unit, or means may be implemented by using software, may be implemented by using hardware, or may be implemented by hardware by executing corresponding software.

In a possible design, the communication apparatus includes a processing unit and a communication unit. The communication unit may be configured to transmit and receive a signal, to implement communication between the communication apparatus and another apparatus. The processing unit may be configured to perform some internal operations of the communication apparatus. Functions performed by the processing unit and the communication unit may correspond to operations in the first aspect or the second aspect.

In a possible design, the communication apparatus includes a processor, and the processor may be coupled to a memory. The memory may store a necessary computer program or instructions for implementing functions in the first aspect or the second aspect. The processor may execute the computer program or the instructions stored in the memory. When the computer program is executed or the instructions are executed, the communication apparatus is enabled to implement the method in any possible design or implementation of the first aspect or the second aspect.

In a possible design, the communication apparatus includes a processor and a memory. The memory may store a necessary computer program or instructions for implementing functions in the first aspect or the second aspect. The processor may execute the computer program or the instructions stored in the memory. When the computer program is executed or the instructions are executed, the communication apparatus is enabled to implement the method in any possible design or implementation of the first aspect or the second aspect.

In a possible design, the communication apparatus includes a processor and an interface circuit, and the processor is configured to: communicate with another apparatus via the interface circuit, and perform the method in any possible design or implementation of the first aspect or the second aspect.

It may be understood that, in the third aspect, the processor may be implemented by hardware or software. When the processor is implemented by hardware, the processor may be a logic circuit, an integrated circuit, or the like. When the processor is implemented by software, the processor may be a general-purpose processor, and is implemented by reading software code stored in a memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a fourth aspect, this application provides a communication system. The communication system may include a first multi-link device and a second multi-link device. The first multi-link device is configured to perform the communication method provided in the first aspect, and the second multi-link device is configured to perform the communication method provided in the second aspect.

According to a fifth aspect, this application provides a computer-readable storage medium. The computer storage medium stores computer-readable instructions; and when a computer reads and executes the computer-readable instructions, the computer is enabled to perform the method in any one of the possible designs of the first aspect or the second aspect.

According to a sixth aspect, this application provides a computer program product; and when a computer reads and executes the computer program product, the computer is enabled to perform the method in any one of the possible designs of the first aspect or the second aspect.

According to a seventh aspect, this application provides a chip. The chip includes a processor, and the processor is coupled to a memory, and is configured to read and execute a software program stored in the memory, to implement the method in any one of the possible designs of the first aspect or the second aspect.

### BRIEF DESCRIPTION OF DRAWINGS

FIG. 1 is a diagram of a network architecture of a WLAN to which an embodiment of this application is applicable;
FIG. 2 is a diagram of an AP MLD according to an embodiment of this application;
FIG. 3 is a diagram of a link between an AP MLD and a non-AP MLD according to an embodiment of this application;
FIG. 4 is a diagram of an STR communication mode according to an embodiment of this application.
FIG. 5 is a diagram of an NSTR communication mode according to an embodiment of this application.
FIG. 6 is a diagram of a structure of an EHT PPDU and an HE PPDU according to an embodiment of this application;
FIG. 7(a) and FIG. 7(b) are a diagram in which a frame 1 and a frame 2 are not aligned in a time unit (or symbol) according to an embodiment of this application;
FIG. 8 is a schematic flowchart corresponding to a communication method according to an embodiment of this application;
FIG. 9(a), FIG. 9(b), FIG. 9(c), and FIG. 9(d) are a diagram of a time relationship between a first frame and a second frame according to an embodiment of this application;
FIG. 10 is a diagram of a first link and a second link according to an embodiment of this application;
FIG. 11 is a block diagram of a possible example of an apparatus according to an embodiment of this application;
FIG. 12 is a diagram of a structure of a communication apparatus according to an embodiment of this application; and
FIG. 13 is a diagram of a structure of a communication apparatus according to an embodiment of this application.

### DESCRIPTION OF EMBODIMENTS

The following describes the technical solutions in embodiments of this application with reference to the accompanying drawings in embodiments of this application. Embodiments of this application may be applied to a wireless local area network (wireless local area network, WLAN), for example, may be applied to any one of the IEEE 802.11 series protocols currently used in the WLAN. The WLAN may include one or more basic service sets (basic service sets, BSSs). Network nodes in the basic service set include an access point (access point, AP) and a station (station, STA). In addition, based on the original BSS, IEEE 802.11ad introduces a personal basic service set (personal basic service set, PBSS) and a personal basic service set control point (PBSS control point, PCP). Each personal basic service set may include one AP/PCP and a plurality of non APs/PCPs associated with the AP/PCP. In embodiments of this application, the non AP/PCP may be referred to as a STA, and the PCP may be understood as a name of a role of the AP in the PBSS.

Embodiments of this application are also applicable to a wireless local area network like an internet of things (internet of things, IoT) network or a vehicle-to-everything (vehicle to X, V2X) network. Certainly, embodiments of this application are further applicable to other possible communication systems, for example, a long term evolution (long term evolution, LTE) communication system, an LTE frequency division duplex (frequency division duplex, FDD) communication system, an LTE time division duplex (time division duplex, TDD) communication system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future evolved communication system.

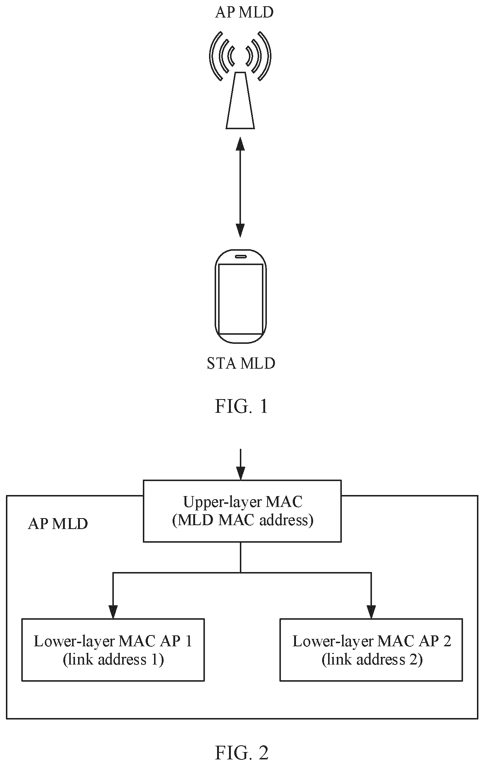

The following uses an example in which embodiments of this application are applicable to the WLAN. FIG. 1 is a diagram of a network architecture of a WLAN to which an embodiment of this application is applicable. In FIG. 1, an example in which the WLAN includes one AP and one STA is used. A STA associated with the AP can receive a radio frame sent by the AP, and can send a radio frame to the AP. Embodiments of this application are described by using communication between the AP and the STA as an example. It may be understood that embodiments of this application are also applicable to communication between APs. For example, the APs may communicate with each other through a distributed system (distributed system, DS). Embodiments of this application are also applicable to communication between STAs.

The AP may be an access point used by a terminal device (for example, a mobile phone) to access a wired (or wireless) network, and is mainly deployed in a home, a building, or a campus. A typical coverage radius is tens of meters to hundreds of meters. Certainly, the AP may alternatively be deployed outdoors. The AP is equivalent to a bridge that connects the wired network and the wireless network. A main function of the AP is to connect various wireless network clients together and then connect the wireless network to the Ethernet. For example, the AP may be a terminal device (for example, a mobile phone) or a network device (for example, a router) with a wireless fidelity (wireless fidelity, Wi-Fi) chip. In embodiments of this application, the AP may be a device that supports the 802.11be standard, or may be a device that supports a plurality of WLAN standards of the 802.11 family, such as 802.11ax, 802.11ay, 802.11ac, 802.11n, 802.11g, 802.11b, 802.11a, and a next generation of 802.11be.

The STA may be a wireless communication chip, a wireless sensor, a wireless communication terminal, or the like, and may also be referred to as a user. For example, the STA may be a mobile phone, a tablet computer, a set-top box, a smart television, a smart wearable device, a vehicle-mounted communication device, and a computer that supports a Wi-Fi communication function. Optionally, the STA may support the 802.11 be standard, or may support the plurality of WLAN standards of the 802.11 family, such as 802.11ax, 802.11ay, 802.11ac, 802.11n, 802.11g, 802.11b, 802.11a and the next generation of 802.11be.

It may be understood that quantities of APs and STAs shown in FIG. 1 are merely examples, and may be small or large.

The AP in FIG. 1 may be an MLD having a multi-link communication function, and is referred to as an AP MLD. The STA in FIG. 1 may be an MLD having a multi-link communication function, and is referred to as a non-AP MLD or a STA MLD. The AP MLD and the non-AP MLD have a plurality of radio frequency modules, which respectively operate on different frequency bands. For example, frequency bands on which the AP MLD and the non-AP MLD operate may be all or a part of sub 1 gigabit (GHz), 2.4 GHz, 5 GHz, 6 GHz, and a high frequency 60 GHz.

The AP MLD is used as an example. The AP MLD may include one or more affiliated (affiliated) stations, and each affiliated station has a respective media access control (media access control, MAC) address (address). As shown in FIG. 2, affiliated stations of an AP MLD include an AP 1 and an AP 2, a lower-layer (low) MAC address of the AP 1 is a link address 1, and a lower-layer MAC address of the AP 2 is a link address 2. In addition, the AP MLD has an upper-layer (upper) MAC address, which is referred to as an MLD MAC address.

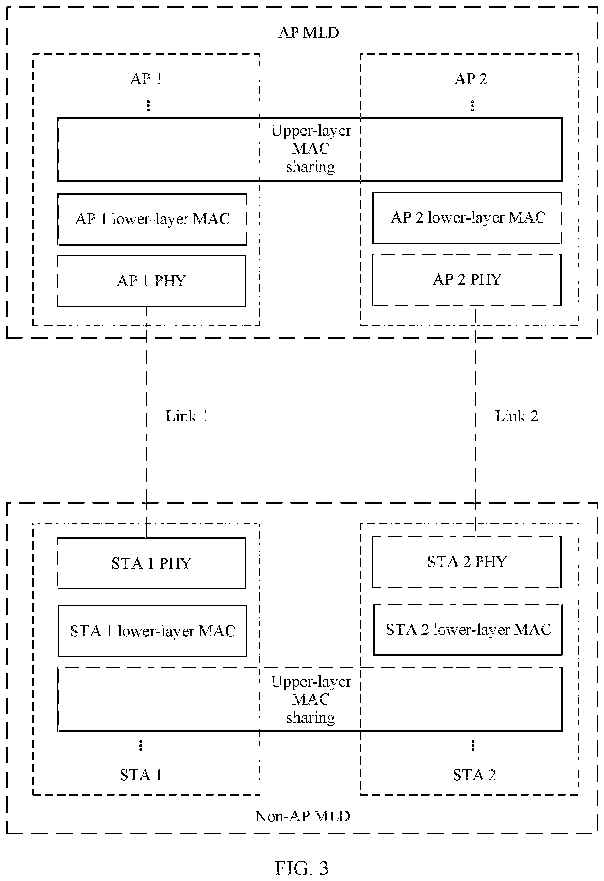

The AP MLD and the non-AP MLD may exchange signaling on a low frequency link, to establish a multi-link connection. As shown in FIG. 3, an AP MLD includes an AP 1 and an AP 2. The AP 1 includes an AP 1 PHY, an AP 1 lower-layer MAC, and an upper-layer MAC. The AP 2 includes an AP 2 PHY, an AP 2 lower-layer MAC, and the upper-layer MAC. The AP1 and the AP 2 share the upper-layer MAC. A non-AP MLD includes a STA 1 and a STA 2. The STA 1 includes a STA 1 PHY, a STA 1 lower-layer MAC, and an upper-layer MAC. The STA 2 includes a STA 2 PHY, a STA 2 lower-layer MAC, and the upper-layer MAC. The STA 1 and the STA 2 share the upper-layer MAC. The AP 1 and the STA 1 are connected through a link 1, and the AP 2 and the STA 2 are connected through a link 2.

When a plurality of links are established, the non-AP MLD sends an association request (association request) frame on the link 1, where the association request frame carries STA-side information of the link 1 and STA-side information of the link 2. For example, the association request frame may carry a multi-link element (multi-link element) field, and the multi-link element field is used to carry information about the non-AP MLD and information about a station in the non-AP MLD. The AP MLD sends an association response (association response) frame on the link 1, where the association response frame carries AP-side information on the link 1 and further carries AP-side information on the link 2. In this way, the STA 1 and the STA 2 of the non-AP MLD respectively establish association with the AP 1 and the AP 2 of the AP MLD.

The following first describes related technical features in embodiments of this application. These explanations are intended to make embodiments of this application easier to understand, and should not be construed as a limitation on the protection scope claimed in this application.

### (1) Multi-link communication mode

Currently, there are two communication modes in multi-link communication: a simultaneous transmitting and receiving (simultaneous transmitting and receiving, STR) communication mode and a non-simultaneous transmitting and receiving (non-STR, NSTR) communication mode.

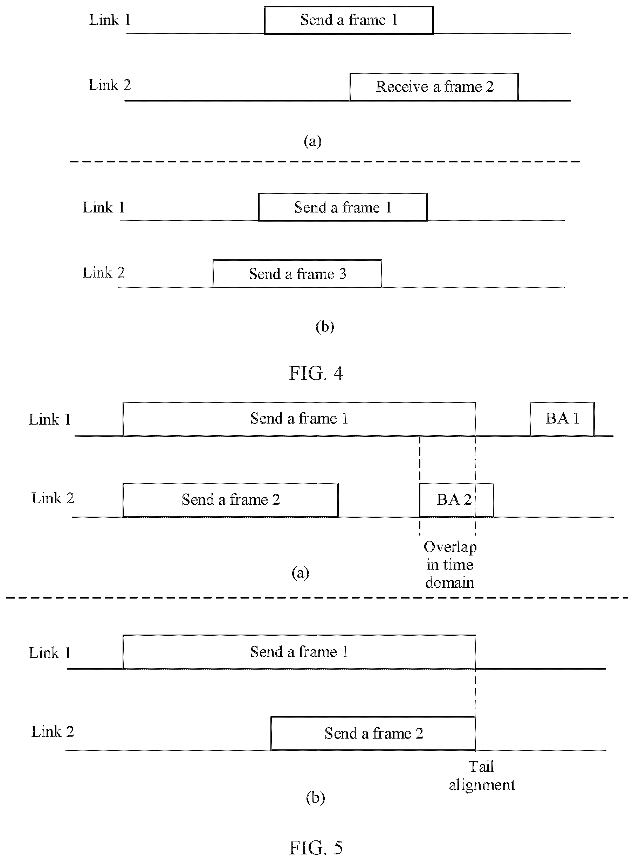

For the STR communication mode, frames on different links have no specific time requirements, and different frames may be independently transmitted on two links. For example, two links between a multi-link device 1 and a multi-link device 2 are used as examples. If the multi-link device 1 and the multi-link device support the STR, as shown in (a) in FIG. 4, the multi-link device 1 may send a frame 1 to the multi-link device 2 on a link 1, and receive a frame 2 from the multi-link device 2 on a link 2, and the frame 1 and the frame 2 may overlap or may not overlap in time domain; or as shown in (b) in FIG. 4, the multi-link device 1 may send a frame 1 to the multi-link device 2 on a link 1, and send a frame 3 to the multi-link device 2 on a link 2, and the frame 1 and the frame 3 may overlap or may not overlap in time domain.

For the NSTR communication mode, when frequency domain spacings between frequency domain resources corresponding to different links are close to each other, sending a signal on one link interferes with receiving a signal on another link. When a device sends the signal, signal energy is large; and during reception of the signal, the signal arrives at a receive end after channel attenuation, and signal energy is small when the receive end receives the signal. Therefore, energy leaked from the signal on the one link to the another link during sending hinders reception of the signal on the another link. As shown in (a) in FIG. 5, the multi-link device 1 sends a frame 1 to the multi-link device 2 on a link 1, and sends a frame 2 to the multi-link device 2 on a link 2. After receiving the frame 1 on the link 1, the multi-link device 2 sends a block acknowledgment (block acknowledge) BA 1, and after receiving the frame 2 on the link 2, the multi-link device 2 sends a BA 2. A length of the frame 1 is greater than a length of the frame 2. Therefore, when sending of the frame 1 is not completed, the multi-link device 2 has completely received the frame 2 and sent the BA 2 on the link 2. Therefore, the BA 2 and the frame 1 may overlap in time domain. In this case, sending the BA 2 on the link 2 by the multi-link device hinders reception of the frame 1 on the link 1 by the multi-link device. Therefore, in the NSTR communication mode, the multi-link device needs to align tails (that is, end times) of the frames sent on the two links, as shown in (b) in FIG. 5, to avoid simultaneous transmitting and receiving.

### (2) Frame

The frame in embodiments of this application may be a beacon (beacon) frame, a data frame, or a sounding (sounding) frame transmitted between an AP and a STA. This is not specifically limited.

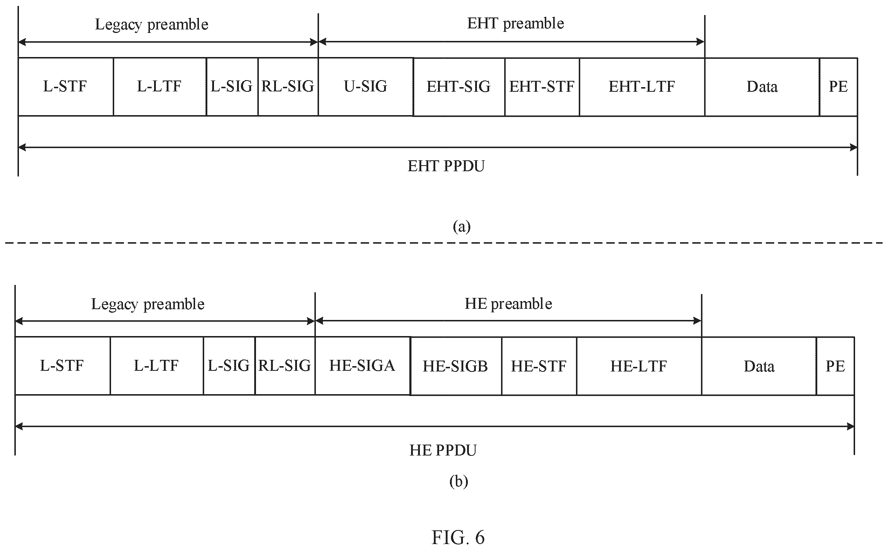

The data frame is used as an example. The data frame may also be referred to as a physical layer protocol data unit (physical layer protocol data unit, PPDU). The following describes two possible PPDU structures. (a) in FIG. 6 is a diagram of a structure of an extremely high throughput (extremely high throughput, EHT) PPDU, and (b) in FIG. 6 is a diagram of a structure of a high efficiency (high efficiency, HE) PPDU.

### (2.1) EHT PPDU

As shown in (a) in FIG. 6, the EHT PPDU may include a legacy preamble (legacy preamble) part, an EHT preamble part, and a data part.

The legacy preamble part includes a legacy-short training field (legacy-short training field, L-STF) field, a legacy-long training field (legacy-long training field, L-LTF) field, a legacy-signal field (legacy-signal field, L-SIG) field, and a repeated legacy-signal field (repeated legacy-signal field, RL-SIG) field.

The EHT preamble part includes a universal signal field (universal SIG, U-SIG) field, an extremely high throughput signal field (EHT-SIG) field, an extremely high throughput short training field (extremely high throughput short training field, EHT-STF) field, and an extremely high throughput long training field (extremely high throughput long training field, EHT-LTF) field.

The data part may include a data (data) field and a data packet extension (packet extension, PE) field.

In an example, the L-STF field occupies two first time units in time domain; the L-LTF field occupies two first time units in time domain; the L-SIG field occupies one first time unit in time domain; the RL-SIG field occupies one first time unit in time domain; the U-SIG field occupies two first time units in time domain; the EHT-SIG field occupies at least one first time unit in time domain, and a quantity of first time units occupied by the EHT-SIG field in time domain depends on a size of user information carried in the field (for example, the EHT-SIG field occupies two first time units in time domain); the EHT-STF field occupies one first time unit in time domain; and the EHT-LTF field may include at least one sub-field, for example, an EHT-LTF sub-field 1, an EHT-LTF sub-field 2, ..., and an EHT-LTF sub-field n, where n is an integer, each sub-field occupies one second time unit, and a quantity of sub-fields may be determined based on a quantity of spatial streams. The data field occupies at least one third time unit in time domain, and a quantity of third time units occupied by the data field in time domain depends on an amount of data carried in the field.

For example, duration of the first time unit may be duration of a first orthogonal frequency division multiplexing (orthogonal frequency division multiplexing, OFDM) symbol (symbol for short). The second time unit may be a sum of duration of a second symbol and duration of a first guard interval (guard interval, GI). For example, the first guard interval may be 0.8 microseconds (µs), 1.6 µs, or 3.2 µs. The third time unit may be a sum of duration of a third symbol and duration of a second guard interval, and the second guard interval may be, for example, 0.8 µs, 1.6 µs, or 3.2 µs.

The foregoing different fields usually correspond to different subcarrier spacings (for example, each field before the EHT-LTF field corresponds to a subcarrier spacing 1, the EHT-LTF field corresponds to a subcarrier spacing 2, the data field corresponds to a subcarrier spacing 3, and the subcarrier spacing 1, the subcarrier spacing 2, and the subcarrier spacing 3 are different), and different subcarrier spacings correspond to different symbol lengths. Therefore, lengths of the first time unit, the second time unit, and the third time unit are usually different. For example, the length of the first time unit is 4 µs, the length of the second time unit is equal to a sum of 3.2 µs (the length of the symbol) and 1.6 µs (the length of the first GI), and the length of the third time unit is equal to a sum of 12.8 µs (the length of the symbol) and 0.8 µs (the length of the first GI).

### (2.2) HE PPDU

As shown in (b) in FIG. 6, the HE PPDU may include a legacy preamble (legacy preamble) part, an HE preamble part, and a data part. For the legacy preamble part and the data part, refer to those in the EHT PPDU. The HE preamble part includes an HE signal field A (HE-SIGA) field, an HE signal field B (HE-SIGB) field, an HE-STF field, and an HE-LTF field.

It may be understood that, for meanings of the foregoing fields, refer to the standard protocol. The foregoing EHT PPDU and HE PPDU are merely examples. In a standard formulation process or a technology development process, there may be another possible structure. This is not limited in embodiments of this application.

### (3) Alignment

"Alignment" in embodiments of this application may mean time synchronization. For example, start times are aligned (that is, the same) and/or end times are aligned (that is, the same). In addition, "alignment", "synchronization", "simultaneous", and "same time" in embodiments of this application do not mean exactly the same in a strict sense. During actual implementation, due to a plurality of factors such as different frame transmission parameters, different access times, and transceiver processing capabilities on two links, "alignment", "synchronization", or "simultaneous" allows a small offset, for example, not exceeding a short inter-frame space (short inter-frame space, SIFS).

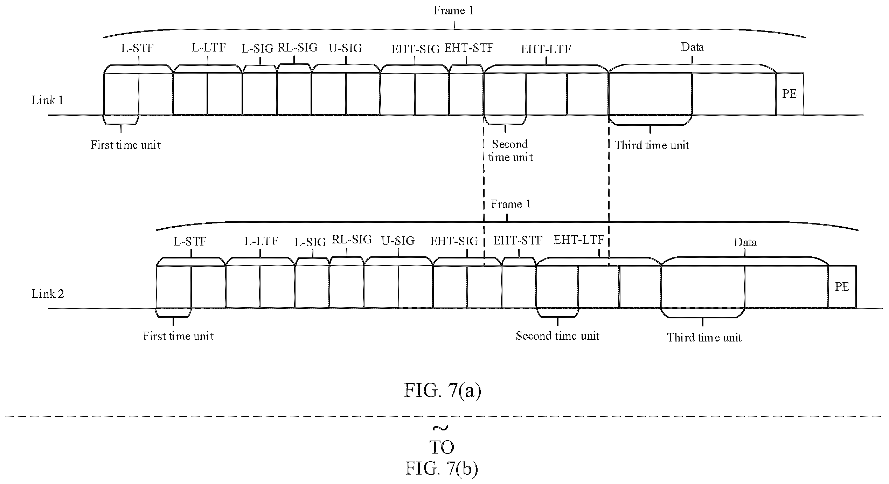

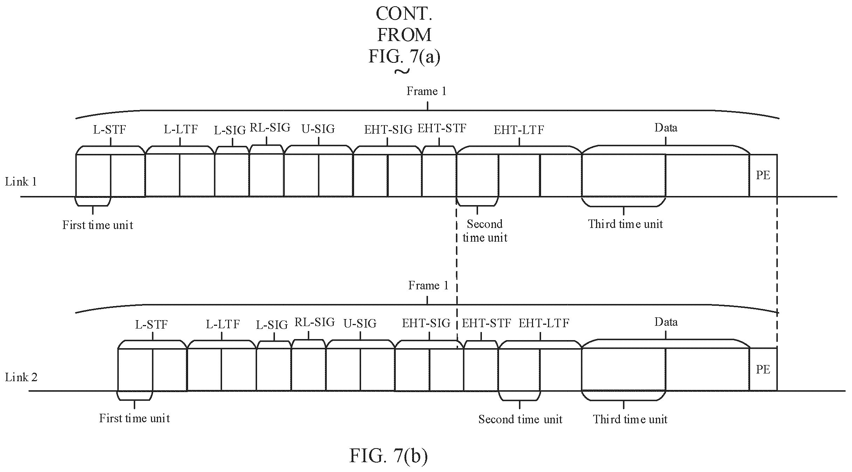

For multi-link communication, both STR and NSTR have an obvious disadvantage, that is, self-interference between links is large. Specifically, for the STR communication mode, frames on different links have no specific time requirements. Therefore, a phenomenon that a field in a frame 1 sent by a multi-link device 1 on a link 1 and a field in a frame 2 sent by the multi-link device 1 on a link 2 are not aligned exists. As shown in FIG. 7(a), an EHT-LTF field in the frame 1 and an EHT-LTF field in the frame 2 are not aligned. For the NSTR communication mode, even if tails of the frame 1 and the frame 2 are aligned, a phenomenon that a field in the frame 1 and a field in the frame 2 are not aligned may still exist. As shown in FIG. 7(b), an EHT-LTF field in the frame 1 and an EHT-LTF field in the frame 2 are not aligned.

Further, a length of a time unit (or symbol) corresponding to the EHT-LTF field is different from a time unit (or symbol) corresponding to a field before the EHT-LTF field. Therefore, when the EHT-LTF field in the frame 1 and the EHT-LTF field in the frame 2 are not aligned, the frame 1 and the frame 2 are not aligned in the time unit (or symbol). Consequently, large spectrum leakage exists between the symbols of the frame 1 and the frame 2, and interference is large.

Based on this, an embodiment of this application provides a communication method, to reduce interference between a plurality of links and improve communication efficiency.

The following describes in detail, with reference to specific embodiments, the communication method provided in embodiments of this application. In a specific embodiment, an example in which the method provided in embodiments of this application is applied to the network architecture shown in FIG. 1 is used. In addition, the method may be executed by two communication apparatuses, and the two communication apparatuses are, for example, a first communication apparatus and a second communication apparatus. The first communication apparatus may be a first multi-link device or a communication apparatus that can support the first multi-link device in implementing a function required by the method, or certainly may be another communication apparatus, for example, a chip or a chip system; and the second communication apparatus may be a second multi-link device or a communication apparatus that can support the second multi-link device in implementing a function required by the method, or certainly may be another communication apparatus, for example, a chip or a chip system. In this embodiment of this application, an example in which the first multi-link device is a non-AP MLD and the second multi-link device is an AP MLD is used for description.

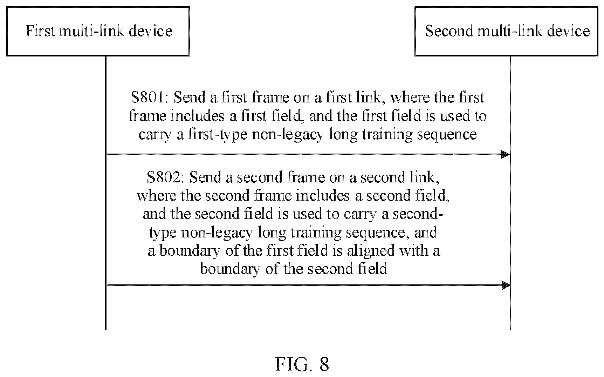

FIG. 8 is a schematic flowchart corresponding to a communication method according to an embodiment of this application. For ease of description, in FIG. 8, two links between a first multi-link device and a second multi-link device are used as examples for description. The procedure may also be extended to a scenario in which there are more links between the first multi-link device and the second multi-link device. As shown in FIG. 8, the procedure may include the following steps.

S801: The first multi-link device sends a first frame on a first link, and correspondingly, the second multi-link device receives the first frame on the first link.

S802: The first multi-link device sends a second frame on a second link, and correspondingly, the second multi-link device receives the second frame on the second link.
(1) The first frame and the second frame are described.

For example, the first frame may include at least one field, for example, the first frame includes a first field, and the first field is used to carry a first-type non-legacy long training sequence. The second frame may include at least one field, for example, the second frame includes a second field, and the second field is used to carry a second-type non-legacy long training sequence.

The first type and the second type may be a same type, that is, the first frame and the second frame are frames of a same type. For example, both the first frame and the second frame are EHT PPDUs. In this case, both the first field and the second field are EHT-LTF fields. For another example, both the first frame and the second frame are HE PPDUs. In this case, both the first field and the second field are HE-LTF fields. Alternatively, the first type and the second type may be different types, that is, the first frame and the second frame are frames of different types. For example, the first frame is an EHT PPDU, and the second frame is an HE PPDU. In this case, the first field is an EHT-LTF field, and the second field is an HE-LTF field. For another example, the first frame is an HE PPDU, and the second frame is an EHT PPDU. In this case, the first field is an HE-LTF field, and the second field is an EHT-LTF field.

(1.1) A relationship between the first field and the second field is described.

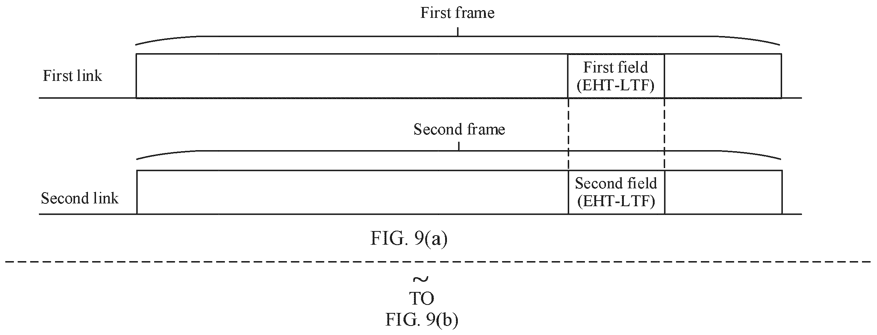

For example, as shown in FIG. 9(a), a start time of the first field is aligned with a start time of the second field, and an end time of the first field is aligned with an end time of the second field. In other words, a boundary of the first field is aligned with a boundary of the second field.

Further, the first field may include M first subfields, and the second field may include M second subfields. In other words, a quantity of subfields included in the first field is the same as a quantity of subfields included in the second field, and both are M. M is determined based on a larger value of numbers of spatial streams of the first link and the second link. In addition, a guard interval corresponding to the first field and a guard interval corresponding to the second field have a same length.

It may be understood that when the boundary of the first field is aligned with the boundary of the second field, the first frame and the second frame are aligned in a time unit (or symbol), thereby reducing interference between the first link and the second link.

(1.2) A relationship between a third field and a fourth field is described.

Optionally, the first frame further includes the third field, and the third field is used to carry first-type user information. The second frame further includes the fourth field, and the fourth field is used to carry second-type user information. For example, if both the first frame and the second frame are EHT PPDUs, both the third field and the fourth field are EHT-SIG fields.

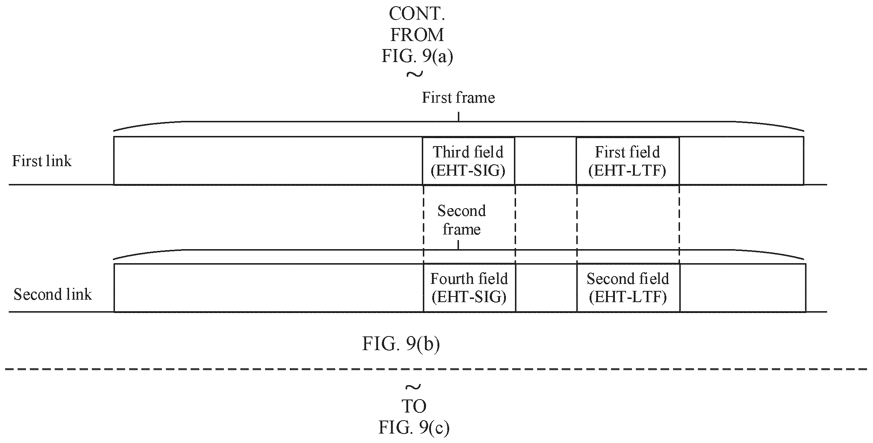

For example, as shown in FIG. 9(b), a start time of the third field is aligned with a start time of the fourth field, and an end time of the third field is aligned with an end time of the fourth field. In other words, a boundary of the third field is aligned with a boundary of the fourth field, or the third field and the fourth field occupy same quantities of symbols.

For example, modulation and coding schemes (modulation and coding scheme, MCS) used by the third field and the fourth field may be the same, or may be different. If the third field and the fourth field use the same MCS, when a quantity of bits of the first-type user information is different from a quantity of bits of the second-type user information, for example, the quantity of bits of the second-type user information is greater than the quantity of bits of the first-type user information, a padding (padding) bit may be added to the third field, so that the quantity of bits carried in the third field is the same as the quantity of bits carried in the fourth field, to ensure that the third field and the fourth field occupy the same quantities of symbols. In this case, information carried in the third field includes the first-type user information and the padding bit, and information carried in the fourth field includes the second-type user information.

If the third field and the fourth field use the different MCSs, for example, the third field uses an MCS0 and the fourth field uses an MCS1, a quantity of symbols occupied by the third field (for example, an estimated quantity of symbols is X1) may be estimated based on the first-type user information and the MCS0, and a quantity of symbols occupied by the fourth field (for example, an estimated quantity of symbols is X2) may be estimated based on the second-type user information and the MCS1. If the estimated quantity of symbols occupied by the third field is different from the estimated quantity of symbols occupied by the fourth field (for example, X1 is less than X2), a value may be obtained based on the larger quantity of symbols, and a padding bit is added to the third field, so that both the third field and the fourth field finally occupy X2 symbols.

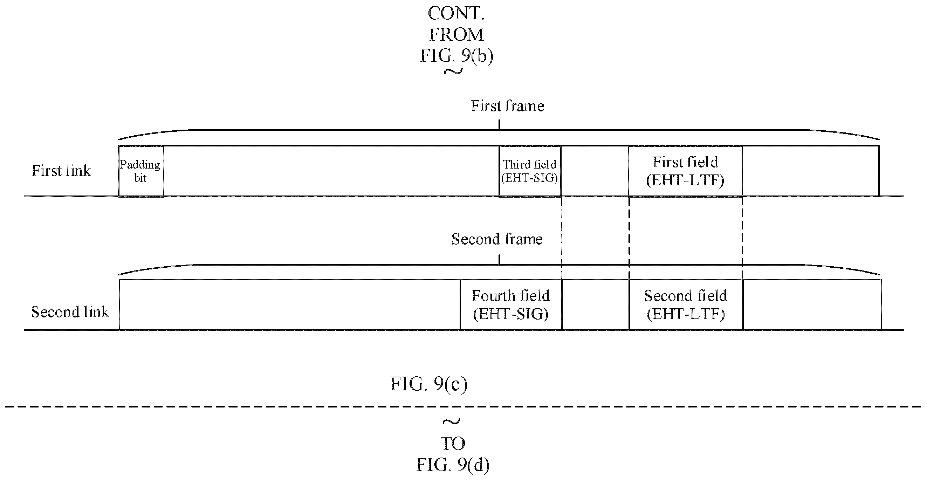

It may be understood that, the foregoing description is provided by using an example in which the padding bit is added to the third field. In another possible example, a padding bit may be added to another position (for example, a header) of the first frame. A sum of quantities of symbols occupied by the padding bit and the third field is the same as the quantity of symbols occupied by the fourth field, as shown in FIG. 9(c).

(1.3) A relationship between a data field in the first frame and a data field in the second frame is described.

Optionally, the first frame further includes the data field, the data field in the first frame is located after the first field, and a start time of the data field in the first frame is an end time of the first field. The second frame further includes the data field, the data field in the second frame is located after the second field, and a start time of the data field in the second frame is an end time of the second field.

An end time of the data field in the first frame may be the same as an end time of the data field in the second frame. In other words, a boundary of the data field in the first frame is aligned with a boundary of the data field in the second frame, or a quantity of symbols occupied by the data field in the first frame is the same as a quantity of symbols occupied by the data field in the second frame.

For example, MCSs used by the data field in the first frame and the data field in the second frame may be the same, or may be different. When the quantities of symbols of the data fields on the two links are different, a value of a final quantity of symbols of the data field is obtained based on a larger quantity of symbols of the two links. If a data amount of a link is insufficient to fill all symbols of the data field, a tail padding manner may be used for padding. For details, refer to implementation of the third field and the fourth field. Details are not described again.

It may be understood that the data field may include an a_factor part, or may not include the a_factor part.

(1.4) A relationship between another field in the first frame and another field in the second frame is described.

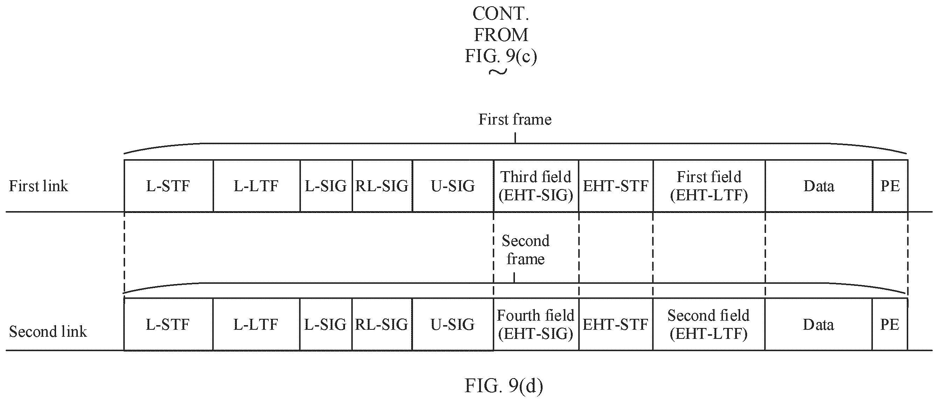

Optionally, a start time of the first frame is aligned with a start time of the second frame, and/or an end time of the first frame is aligned with an end time of the second frame, as shown in FIG. 9(d).

In this embodiment of this application, in addition to the first field and the third field, the first frame further includes another possible field, for example, an L-STF field, an L-LTF field, an L-SIG field, an RL-SIG field, a U-SIG field, and an EHT-STF field. Similarly, in addition to the second field and the fourth field, the second frame further includes another possible field, for example, an L-STF field, an L-LTF field, an L-SIG field, an RL-SIG field, a U-SIG field, and an EHT-STF field. A boundary of the another field included in the first frame is aligned with a boundary of the another field included in the second frame. For example, the L-STF field in the first frame is aligned with the L-STF field in the second frame, the L-LTF field in the first frame is aligned with the L-LTF field in the second frame, the L-SIG field in the first frame is aligned with the L-SIG field in the second frame, the RL-SIG field in the first frame is aligned with the RL-SIG field in the second frame, the U-SIG field in the first frame is aligned with the U-SIG field in the second frame, and the EHT-STF field in the first frame is aligned with the EHT-STF field in the second frame.

(2) An implementation in which the first multi-link device sends the first frame and the second frame is described.

In a possible implementation, the first multi-link device may perform rollback on the first link based on a first backoff parameter, and perform rollback on the second link based on a second backoff parameter, where the second backoff parameter is greater than the first backoff parameter. If a channel is listened to be idle on the second link (the rollback on the second link has not succeeded) when the rollback on the first link succeeds, the first frame may be sent on the first link, and the second frame may be sent on the second link at the same time. Alternatively, if a channel is listened to be busy on the second link when the rollback on the first link succeeds, the first link may keep a state in which the rollback succeeds and wait until the channel is listened to be idle on the second link, and the first frame may be sent on the first link, and the second frame may be sent on the second link at the same time.

In still another possible implementation, the second multi-link device may send a first trigger frame to the first multi-link device on the first link, where the first trigger frame is used to trigger the first multi-link device to send the first frame and the second frame. Correspondingly, after receiving the first trigger frame, the first multi-link device may send the first frame on the first link, and send the second frame on the second link. In other words, the second multi-link device may send one trigger frame on one link, to trigger the first multi-link device to send the first frame and the second frame on the two links simultaneously, thereby saving transmission resources.

Alternatively, the second multi-link device may send a first trigger frame to the first multi-link device on the first link, where the first trigger frame is used to trigger the first multi-link device to send the first frame. The second multi-link device may send a second trigger frame to the first multi-link device on the second link, where the second trigger frame is used to trigger the first multi-link device to send the second frame. A start time of the first trigger frame is aligned with a start time of the second trigger frame, and an end time of the first trigger frame is aligned with an end time of the second trigger frame. Correspondingly, after receiving the first trigger frame and the second trigger frame, the first multi-link device may send the first frame on the first link, and send the second frame on the second link at the same time.

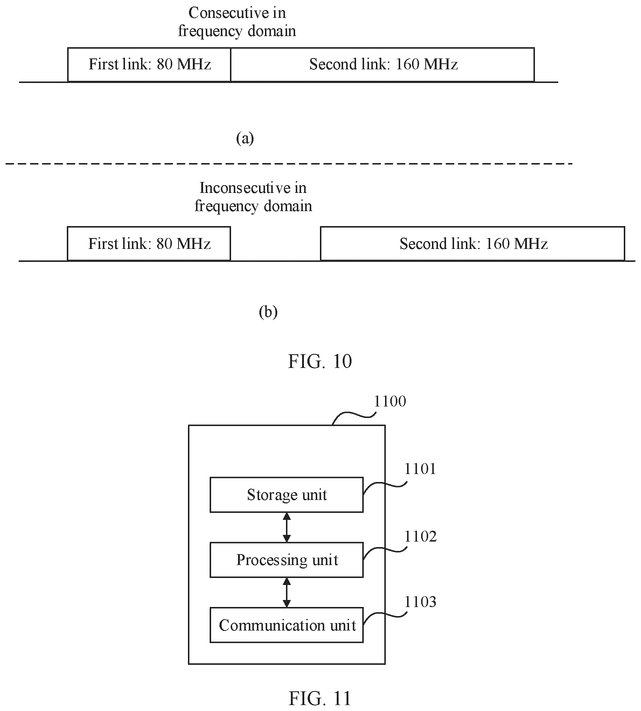

In addition, in this embodiment of this application, a frequency domain resource corresponding to the first link and a frequency domain resource corresponding to the second link may be consecutive in frequency domain. For example, as shown in (a) in FIG. 10, a bandwidth of the frequency domain resource corresponding to the first link is 80 MHz, a bandwidth of the frequency domain resource corresponding to the second link is 160 MHz, and an end position of the frequency domain resource corresponding to the first link is a start position of the frequency domain resource corresponding to the first link. Alternatively, a frequency domain resource corresponding to the first link and a frequency domain resource corresponding to the second link are inconsecutive in frequency domain. As shown in (b) in FIG. 10, there is a frequency domain spacing between an end position of the frequency domain resource corresponding to the first link and a start position of the frequency domain resource corresponding to the first link.

According to the method in this embodiment of this application, a time relationship between different frames sent on the first link and the second link is restricted, and a coupling relationship between the different links is improved, so that the first frame and the second frame are aligned in the time unit (or symbol), thereby reducing interference between the first link and the second link. For example, when frequency spacings between frequency domain resources corresponding to a plurality of links are close to each other, interference between the plurality of links can be reduced, and network capacity and communication efficiency can be improved.

It may be understood as follows: (1) The first frame and the second frame may alternatively be other possible frames. For example, the first frame is a first sounding frame, and the second frame is a second sounding frame. In this case, the first field and the second field may be Sounding EHT-LTF fields.

(2) The foregoing method may be applied to a plurality of possible scenarios. For example, the AP MLD may separately send beacon frames on primary 20 MHz of two links. If the two beacon frames do not overlap in time domain, there is no special requirement. If the two beacon frames overlap in time domain, to reduce interference, it needs to be ensured that the two beacon frames are aligned, that is, boundaries of all time units (or symbols) of the two beacon frames are aligned. In addition, start times of the two beacon frames are also aligned, and end times of the two beacon frames are also aligned. A beacon frame of primary 20 MHz of each link includes position information of primary 20 MHz of the other link. Therefore, after reading information in one beacon frame, the non-AP MLD obtains a position of primary 20 MHz of the other link, and then the non-AP MLD may separately determine positions of secondary 20 MHz, secondary 40 MHz, or secondary 80 MHz of the two links based on the positions of the primary 20 MHz of the two links.

(3) In multi-link communication, data transmitted on the first link and data transmitted on the second link may correspond to a same buffer, and a same encryption manner is used.

The foregoing mainly describes the solutions provided in embodiments of this application from a perspective of interaction between communication apparatuses. It may be understood that, to implement the foregoing functions, the first communication apparatus and the second communication apparatus may include corresponding hardware structures and/or software modules for performing the functions. A person skilled in the art should be easily aware that, in embodiments of this application, the units and algorithm steps in the examples described with reference to embodiments disclosed in this specification can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first communication apparatus and the second communication apparatus may be divided into functional units based on the foregoing method examples. For example, each functional unit may be obtained through division based on a corresponding function, or two or more functions may be integrated into one unit. The integrated unit may be implemented in a form of hardware, or may be implemented in a form of a software functional unit.

FIG. 11 is a block diagram of a possible example of an apparatus according to an embodiment of this application. As shown in FIG. 11, an apparatus 1100 may include a processing unit 1102 and a communication unit 1103. The processing unit 1102 is configured to control and manage an action of the apparatus 1100. The communication unit 1103 is configured to support communication between the apparatus 1100 and another device. Optionally, the communication unit 1103 is also referred to as a transceiver unit, and may include a receiving unit and/or a sending unit respectively configured to perform a receiving operation and a sending operation. The apparatus 1100 may further include a storage unit 1101, configured to store program code and/or data of the apparatus 1100.

The apparatus 1100 may be the first multi-link device (for example, a STA MLD) in the foregoing embodiment, or may be a component (for example, a circuit or a chip) disposed in the first multi-link device. The processing unit 1102 may support the apparatus 1100 in performing actions of the first multi-link device in the foregoing method examples. Alternatively, the processing unit 1102 mainly performs an internal action of the first multi-link device in the method examples, and the communication unit 1103 may support communication between the apparatus 1100 and another device.

For example, in an embodiment, the communication unit 1103 is configured to send a first frame on a first link, where the first frame includes a first field, and the first field is used to carry a first-type non-legacy long training sequence. The communication unit 1103 sends a second frame on a second link, where the second frame includes a second field, and the second field is used to carry a second-type non-legacy long training sequence. A start time of the first field is aligned with a start time of the second field, and an end time of the first field is aligned with an end time of the second field.

The apparatus 1100 may be the second multi-link device (for example, an AP MLD) in the foregoing embodiment, or may be a component (for example, a circuit or a chip) disposed in the second multi-link device. The processing unit 1102 may support the apparatus 1100 in performing actions of the second multi-link device in the foregoing method examples. Alternatively, the processing unit 1102 mainly performs an internal action of the second multi-link device in the method examples, and the communication unit 1103 may support communication between the apparatus 1100 and another device.

In an embodiment, the communication unit 1103 is configured to receive a first frame on a first link, where the first frame includes a first field, and the first field is used to carry a first-type non-legacy long training sequence. The communication unit 1103 is configured to receive a second frame on a second link, where the second frame includes a second field, and the second field is used to carry a second-type non-legacy long training sequence. A start time of the first field is aligned with a start time of the second field, and an end time of the first field is aligned with an end time of the second field.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SOC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in the manner of the chip, the sending unit is an interface circuit that is of the chip and that is configured to send a signal to another chip or apparatus.

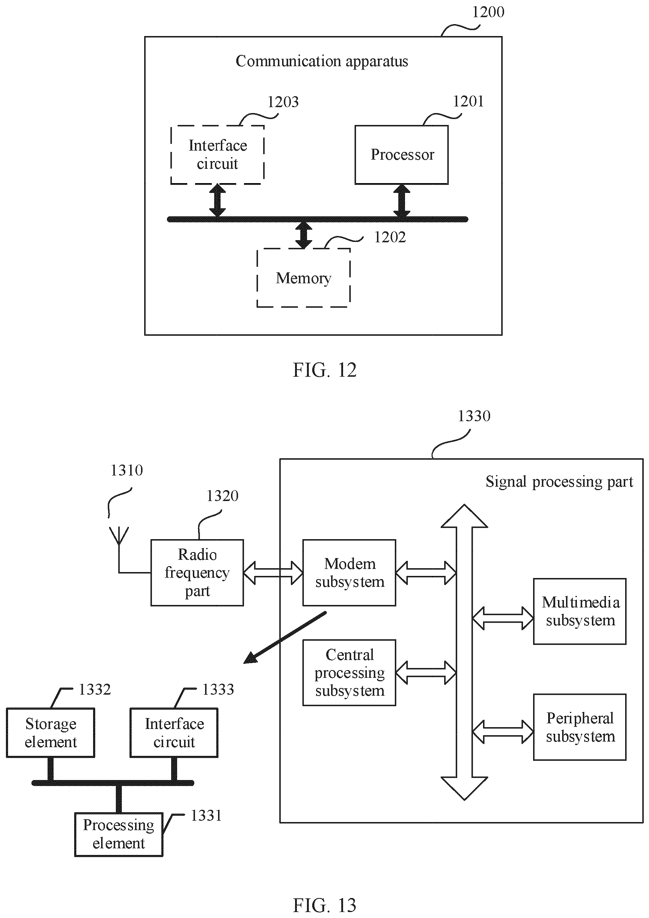

FIG. 12 is a diagram of a structure of a communication apparatus according to an embodiment of this application. The communication apparatus is configured to implement operations of the second multi-link device (for example, an AP MLD) in the foregoing embodiment.

As shown in FIG. 12, a communication apparatus 1200 may include a processor 1201, a memory 1202, and an interface circuit 1203. The processor 1201 may be configured to: process a communication protocol and communication data, and control the communication apparatus 1200. The memory 1202 may be configured to store a program and data, and the processor 1201 may execute, based on the program, the method performed by the AP MLD in embodiments of this application. The interface circuit 1203 may be used by the communication apparatus 1200 to communicate with another device. The communication may be wired communication or wireless communication. The interface circuit may also be replaced with a transceiver.

Alternatively, the memory 1202 may be externally connected to the communication apparatus 1200. In this case, the communication apparatus 1200 may include the interface circuit 1203 and the processor 1201. Alternatively, the interface circuit 1203 may be externally connected to the communication apparatus 1200. In this case, the communication apparatus 1200 may include the memory 1202 and the processor 1201. When both the interface circuit 1203 and the memory 1202 are externally connected to the communication apparatus 1200, the communication apparatus 1200 may include the processor 1201.

The communication apparatus shown in FIG. 12 can implement processes related to the AP MLD in the foregoing method embodiments. Operations and/or functions of the modules in the communication apparatus shown in FIG. 12 are respectively used to implement corresponding procedures in the foregoing method embodiments. For details, refer to the descriptions in the foregoing method embodiments. To avoid repetition, detailed descriptions are properly omitted herein.

FIG. 13 is a diagram of a structure of a communication apparatus according to an embodiment of this application. The communication apparatus is configured to implement operations of the first multi-link device (for example, a STA MLD) in the foregoing embodiment. As shown in FIG. 13, the communication apparatus includes an antenna 1310, a radio frequency part 1320, and a signal processing part 1330. The antenna 1310 is connected to the radio frequency part 1320. In a downlink direction, the radio frequency part 1320 receives, through the antenna 1310, information sent by an AP MLD, and sends the information sent by the AP MLD to the signal processing part 1330 for processing. In an uplink direction, the signal processing part 1330 processes information of the STA MLD, and sends the information to the radio frequency part 1320. The radio frequency part 1320 processes the information of the STA MLD, and then sends processed information to the AP MLD through the antenna 1310.

The signal processing part 1330 may include a modem subsystem, configured to implement processing on each communication protocol layer of data. The signal processing part 1330 may further include a central processing subsystem, configured to implement processing on a STA MLD operating system and an application layer. The signal processing part 1330 may further include other subsystems, for example, a multimedia subsystem and a peripheral subsystem. The multimedia subsystem is configured to implement control on a camera, screen display, and the like, and the peripheral subsystem is configured to implement a connection with another device. The modem subsystem may be a separately disposed chip.

The modem subsystem may include one or more processing elements 1331, for example, a main control CPU and another integrated circuit. In addition, the modem subsystem may further include a storage element 1332 and an interface circuit 1333. The storage element 1332 is configured to store data and a program. However, a program used to perform the method performed by the STA MLD in the foregoing method may not be stored in the storage element 1332, but is stored in a memory other than the modem subsystem. The modem subsystem loads and uses the program during use. The interface circuit 1333 is configured to communicate with another subsystem.

The modem subsystem may be implemented via a chip. The chip includes at least one processing element and an interface circuit. The processing element is configured to perform steps of any method performed by the foregoing STA MLD, and the interface circuit is configured to communicate with another apparatus. In an implementation, the units for implementing the steps in the foregoing methods by the STA MLD may be implemented in a form of scheduling a program by a processing element. For example, the apparatus used as the STA MLD includes a processing element and a storage element, and the processing element invokes a program stored in the storage element, to perform the method performed by the STA MLD in the foregoing method embodiments. The storage element may be a storage element located on a same chip as the processing element, namely, an on-chip storage element.

In another implementation, a program used to perform the method performed by the STA MLD in the foregoing method may be in a storage element, that is, an off-chip storage element, located on a chip different from the processing element. In this case, the processing element invokes a program from the off-chip storage element or loads a program on the on-chip storage element, to invoke and perform the method performed by the STA MLD in the foregoing method embodiments.

In another implementation, a unit for implementing the steps in the foregoing method by the STA MLD may be configured as one or more processing elements. These processing elements are disposed on the modem subsystem. The processing element herein may be an integrated circuit, for example, one or more ASICs, one or more DSPs, one or more FPGAs, or a combination of these integrated circuits. These integrated circuits may be integrated together to form a chip.

Units for implementing the steps in the foregoing methods by the STA MLD may be integrated together and implemented in a form of an SOC. The SOC chip is configured to implement the foregoing methods. At least one processing element and a storage element may be integrated into the chip, and the processing element invokes a program stored in the storage element to implement the foregoing method performed by the STA MLD. Alternatively, at least one integrated circuit may be integrated into the chip, to implement the foregoing method performed by the STA MLD. Alternatively, with reference to the foregoing implementations, functions of some units may be implemented by invoking a program by the processing element, and functions of some units may be implemented by the integrated circuit.

It can be learned that the foregoing apparatus used for the STA MLD may include at least one processing element and an interface circuit, where the at least one processing element is configured to perform any method performed by the STA MLD provided in the foregoing method embodiments. The processing element may perform, in a first manner, some or all steps performed by the STA MLD by invoking a program stored in the storage element; or may perform, in a second manner, some or all steps performed by the STA MLD by using an integrated logic circuit of hardware in the processor element in combination with instructions; or certainly, may perform, in combination with the first manner and the second manner, some or all steps performed by the STA MLD.

The processing element herein is the same as that described above, and may be implemented by using a processor. A function of the processing element may be the same as a function of the processing unit described in FIG. 11. For example, the processing element may be a general-purpose processor, for example, a CPU, or may be one or more integrated circuits configured to implement the foregoing method, for example, one or more ASICs, one or more microprocessors DSPs, one or more FPGAs, or a combination of at least two of the integrated circuit forms. The storage element may be implemented by using a memory, and a function of the storage element may be the same as a function of the storage unit described in FIG. 11. The storage element may be a memory, or may be a general name of a plurality of memories.

The communication apparatus shown in FIG. 13 can implement processes related to the STA MLD in the foregoing method embodiments. Operations and/or functions of the modules in the communication apparatus shown in FIG. 13 are respectively used to implement corresponding procedures in the foregoing method embodiments. For details, refer to the descriptions in the foregoing method embodiments. To avoid repetition, detailed descriptions are properly omitted herein.

An embodiment of this application further provides a communication system. The communication system may include a first multi-link device and a second multi-link device. The first multi-link device is configured to perform the steps on the first multi-link device side in the foregoing method embodiments, and the second multi-link device is configured to perform the steps on the second multi-link device side in the foregoing method embodiments.

The terms "system" and "network" may be used interchangeably in embodiments of this application. "At least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the scope of the claims of this application and equivalent technologies thereof.

## Claims

1. A communication method, wherein the method is applied to a first multi-link device, and the method comprises:
sending a first frame on a first link, wherein the first frame comprises a first field, and the first field is used to carry a first-type non-legacy long training sequence; and
sending a second frame on a second link, wherein the second frame comprises a second field, and the second field is used to carry a second-type non-legacy long training sequence; and
a start time of the first field is aligned with a start time of the second field, and an end time of the first field is aligned with an end time of the second field.

2. The method according to claim 1, wherein
the first field comprises M first subfields, and the second field comprises M second subfields, wherein
M is determined based on a larger value of numbers of spatial streams of the first link and the second link.

3. The method according to claim 1 or 2, wherein
the first frame further comprises a third field, and the third field is used to carry first-type user information; and
the second frame further comprises a fourth field, and the fourth field is used to carry second-type user information, wherein
a start time of the third field is aligned with a start time of the fourth field, and an end time of the third field is aligned with an end time of the fourth field.

4. The method according to claim 1 or 2, wherein
the first frame further comprises a third field, and the third field is used to carry first-type user information and a padding bit; and
the second frame further comprises a fourth field, and the fourth field is used to carry second-type user information, wherein
a start time of the third field is aligned with a start time of the fourth field, and an end time of the third field is aligned with an end time of the fourth field.

5. The method according to any one of claims 1 to 4, wherein
a start time of the first frame is aligned with a start time of the second frame; and/or
an end time of the first frame is aligned with an end time of the second frame.

6. The method according to any one of claims 1 to 5, wherein the method further comprises:
performing rollback on the first link based on a first backoff parameter; and
performing rollback on the second link based on a second backoff parameter, wherein the second backoff parameter is greater than the first backoff parameter; and
the rollback on the first link succeeds, and a channel is listened to be idle on the second link.

7. The method according to any one of claims 1 to 5, wherein the method further comprises:
receiving a first trigger frame from a second multi-link device on the first link, wherein the first trigger frame is used to trigger the first multi-link device to send the first frame and the second frame.

8. The method according to any one of claims 1 to 5, wherein the method further comprises:
receiving a first trigger frame from a second multi-link device on the first link, wherein the first trigger frame is used to trigger the first multi-link device to send the first frame; and
receiving a second trigger frame from the second multi-link device on the second link, wherein the second trigger frame is used to trigger the first multi-link device to send the second frame; and
a start time of the first trigger frame is aligned with a start time of the second trigger frame, and an end time of the first trigger frame is aligned with an end time of the second trigger frame.

9. The method according to any one of claims 1 to 8, wherein a frequency domain resource corresponding to the first link and a frequency domain resource corresponding to the second link are consecutive in frequency domain, or a frequency domain resource corresponding to the first link and a frequency domain resource corresponding to the second link are inconsecutive in frequency domain.

10. A communication method, wherein the method is applied to a second multi-link device, and the method comprises:
receiving a first frame on a first link, wherein the first frame comprises a first field, and the first field is used to carry a first-type non-legacy long training sequence; and
receiving a second frame on a second link, wherein the second frame comprises a second field, and the second field is used to carry a second-type non-legacy long training sequence; and
a start time of the first field is aligned with a start time of the second field, and an end time of the first field is aligned with an end time of the second field.

11. The method according to claim 10, wherein
the first field comprises M first subfields, and the second field comprises M second subfields, wherein
M is determined based on a larger value of numbers of spatial streams of the first link and the second link.

12. The method according to claim 10 or 11, wherein
the first frame further comprises a third field, and the third field is used to carry first-type user information; and
the second frame further comprises a fourth field, and the fourth field is used to carry second-type user information, wherein
a start time of the third field is aligned with a start time of the fourth field, and an end time of the third field is aligned with an end time of the fourth field.

13. The method according to claim 10 or 11, wherein
the first frame further comprises a third field, and the third field is used to carry first-type user information and a padding bit; and
the second frame further comprises a fourth field, and the fourth field is used to carry second-type user information, wherein
a start time of the third field is aligned with a start time of the fourth field, and an end time of the third field is aligned with an end time of the fourth field.

14. The method according to any one of claims 10 to 13, wherein
a start time of the first frame is aligned with a start time of the second frame; and/or
an end time of the first frame is aligned with an end time of the second frame.

15. The method according to any one of claims 10 to 14, wherein the method further comprises:
sending a first trigger frame to a first multi-link device on the first link, wherein the first trigger frame is used to trigger the first multi-link device to send the first frame and the second frame.

16. The method according to any one of claims 10 to 14, wherein the method further comprises:
sending a first trigger frame to a first multi-link device on the first link, wherein the first trigger frame is used to trigger the first multi-link device to send the first frame; and
sending a second trigger frame to the first multi-link device on the second link, wherein the second trigger frame is used to trigger the first multi-link device to send the second frame; and
a start time of the first trigger frame is aligned with a start time of the second trigger frame, and an end time of the first trigger frame is aligned with an end time of the second trigger frame.

17. The method according to any one of claims 10 to 16, wherein a frequency domain resource corresponding to the first link and a frequency domain resource corresponding to the second link are consecutive in frequency domain, or a frequency domain resource corresponding to the first link and a frequency domain resource corresponding to the second link are inconsecutive in frequency domain.

18. A communication apparatus, comprising a processor, wherein the processor is coupled to a memory, the memory stores a computer program, and the processor is configured to invoke the computer program in the memory, so that the communication apparatus performs the method according to any one of claims 1 to 9 or the method according to any one of claims 10 to 17.

19. A computer-readable storage medium, wherein the storage medium stores a computer program or instructions, and when the computer program or the instructions are executed by a computer, the method according to any one of claims 1 to 9 or the method according to any one of claims 10 to 17 is implemented.

20. A computer program product, wherein when a computer reads and executes the computer program product, the computer is enabled to perform the method according to any one of claims 1 to 9 or the method according to any one of claims 10 to 17.
